Europäisches Patentamt

European Patent Office

Office européen des brevets

(11) Veröffentlichungsnummer : **0 109 094**
**B1**

# (12) EUROPÄISCHE PATENTSCHRIFT

(45) Veröffentlichungstag der Patentschrift :
21.01.87

(21) Anmeldenummer : 83111453.3

(22) Anmeldetag : 15.11.83

(51) Int. Cl.⁴ : **H 02 K 15/02**, B 23 P 21/00

(54) Einrichtung zum Herstellen von Paketen aus plattenförmigen Bauteilen.

(30) Priorität : 15.11.82 AT 4140/82

(43) Veröffentlichungstag der Anmeldung :
23.05.84 Patentblatt 84/21

(45) Bekanntmachung des Hinweises auf die Patenterteilung : 21.01.87 Patentblatt 87/04

(84) Benannte Vertragsstaaten :
AT CH DE FR GB IT LI SE

(56) Entgegenhaltungen :
DD-A-   142 111
DE-A- 3 047 362
US-A- 2 390 170
US-A- 4 314 403

(73) Patentinhaber : STIWA-Fertigungstechnik Sticht
Gesellschaft m.b.H
Steinhüblstrasse 4
A-4800 Attnang-Puchheim (AT)

(72) Erfinder : Ott, Gernot
Pilgrimmstrasse 5
A-4840 Vöcklabruck (AT)
Erfinder : Oppermann, Stefan
Höhenstrasse 16
A-4840 Vöcklabruck (AT)
Erfinder : Riedl, Gottfried
Gallaberg 31
A-4850 Timelkam (AT)
Erfinder : Sticht, Walter
Karl-Heinrich-Waggerl-Strasse 8
A-4800 Attnang-Puchheim (AT)

(74) Vertreter : Wolke, Heidemarie, Dr.
Bahnhofstrasse 400
A-4580 Windischgarsten (AT)

## Beschreibung

Die Erfindung betrifft eine Einrichtung zur Herstellung von Paketen aus plattenförmigen Bauteilen, insbesondere Lamellen mit Achsialbohrungen, zum Aufpressen auf Ankerwellen, mit einer Führungsbahn für die Bauteile sowie einer Entnahmevorrichtung für Bauteilpakete.

Bei einer bekannten Einrichtung zur Herstellung von Paketen aus plattenförmigen Bauteilen zum Aufpressen auf Ankerwellen — gemäß DD-A-142 111 — sind die Bauteile mit einer plattenförmigen Stirnfläche senkrecht zur Längsrichtung einer Führungsbahn geführt. Einem Endbereich des Bauteilstapels ist ein als Preßvorrichtung dienender Vorschubantrieb und dem gegenüberliegenden Endbereich ein Anschlag zugeordnet. Der Anschlag wird durch den Boden einer Vorrichtung zur Aufnahme des Bauteilpaketes gebildet. Diese Aufnahme wird durch eine Ausnehmung in einer Platte eines Rundtisches gebildet, die über eine Führungsvorrichtung mit einem Verstellantrieb verstellbar gelagert ist. Die Trennung des Bauteilpaketes von dem Bauteilstapel erfolgt derart, daß der Bauteilstapel in die Vorrichtung zur Aufnahme hineingestellt wird und der über eine den Bauteilstapel zugewandte obere Begrenzung der Platte vorstehende Teil des Bauteilstapels durch eine Bewegung parallel zur Längsrichtung des Bauteilstapels von dem in der Vorrichtung zur Aufnahme verbleibenden Bauteilpaket abgehoben wird. Dazu sind relativ zum Bauteilstapel bewegbare Spannzangen und auf der Vorrichtung zur Aufnahme des Bauteilpaketes Abstreifer zum Zurückhalten der das Bauteilpaket bildenden Bauteile in der Vorrichtung zur Aufnahme vorgesehen. Das Trennen des Bauteilstapels vom Bauteilpaket erfolgt also durch eine Relativbewegung in Längsrichtung des Bauteilstapels zwischen der den Bauteilstapel aufnehmenden Führungsvorrichtung und der während dessen stillstehenden Vorrichtung zur Aufnahme der Bauteile. Dadurch, daß die einzelnen Bauteile aufgrund der vorgehenden mechanischen Bearbeitung, insbesondere beim Stanzen mit Kühlmittelresten versehen sind, die ein Aneinanderhaften der einzelnen Bauteile bewirken, kann es vorkommen, daß beim Abheben des Bauteilstapels mit der Führungsvorrichtung einige Bauteile, die in der stillstehenden Vorrichtung zur Aufnahme der Bauteile verbleiben sollten, mit hochgehoben werden, sodaß das Herstellen exakt gleicher Bauteilpakete nicht immer gewährleistet werden kann.

Weiters ist eine Einrichtung zum Einpressen von Ankerwellen in Lamellenpaketen bekannt — gemäß US-A-2 390 170 — die mit einem umlaufenden Magazin zur Aufnahme mehrerer Lamellenpakete ausgestattet ist. In einer zentralen Bearbeitungsstation werden die Lamellen des Lamellenpaketes in radialer Richtung aufeinander ausgerichtet und es wird die über eine Vereinzelungsvorrichtung zugeführte Ankerwelle in das Lamellenpaket eingepreßt. Durch die Konzentration mehrerer unterschiedlicher Arbeitsvorgänge an der gleichen Bearbeitungsstation sind Störungen nicht zu vermeiden, wodurch der Nutzungsgrad derartiger Einrichtungen nicht sehr hoch ist.

Bei einer derartigen bekannten Einrichtung zur Herstellung von Lamellen-Paketen mit Axialbohrungen zum Aufpressen auf Ankerwellen — gemäß DE-A-30 47 362 — werden die Lamellen mit senkrecht zur Führungsrinne angeordneten Achsialbohrungen auf eine vertikal ausgerichtete Zentrieraufnahme aufgefädelt. Mittels einer Aufnahme-/Aufsteck-Einrichtung werden die zu Paketen zusammengesammelten Lamellen nach Erreichen der gewünschten Paketdicke in eine Positionierungsbüchse eingelegt und dort radial ausgerichtet. Danach wird das in der Positionierungsbüchse positionierte Lamellenpaket verschwenkt, sodaß die Achsialbohrungen horizontal ausgerichtet sind und das Lamellenpaket wird danach auf die horizontal ausgerichtete Ankerwelle aufgepreßt. Die Leistungsfähigkeit sowie die Betriebssicherheit derartiger Einrichtungen ist jedoch begrenzt, da vor jedem Aufpreßvorgang die einzelnen Lamellen zugeführt bzw. positioniert werden müssen, um eine gewünschte Höhe bzw. Dicke des Lamellenpaketes herzustellen.

Der vorliegenden Erfindung liegt die Aufgabe zugrunde, eine Einrichtung zur Herstellung von Paketen aus plattenförmigen Bauteilen zu schaffen, mit der Bauteilpakete mit bestimmter Länge bzw. einer bestimmten Anzahl von Lamellen von einem Bauteilstapel entnommen werden können. Darüber hinaus soll es möglich sein, ein Entnehmen dieser Bauteilpakete auch dann zu ermöglichen, wenn die Bauteilstapel mit einer, in dessen Längsrichtung wirksamen Druckkraft belastet sind.

Diese Aufgabe der Erfindung wird dadurch gelöst, daß diese Vorrichtung zur Aufnahme des Bauteilpaketes als Entnahmevorrichtung ausgebildet ist und auf der in Bewegungsrichtung der Entnahmevorrichtung abgekehrten Seite des Bauteilstapels ein den Umfangsflächen zugeordneter Trennanschlag angeordnet ist, der auf einer parallel zur Führungsbahn-Längsrichtung ausgerichteten Führung, um einen Verstellweg, der kleiner ist als eine Dicke eines Bauteiles, verstellbar gelagert und mit einem Verstellantrieb verbunden ist und daß zum Trennen des Bauteilpaketes vom Bauteilstapel der Verstellantrieb der Entnahmevorrichtung beaufschlagt ist. Die Vorteile dieser Lösung liegen darin, daß das Trennen eines Bauteilpaketes durch eine Relativverschiebung desselben gegenüber dem festgehaltenen Bauteilstapel und dessen Trennanschlag erfolgt, wodurch eine einfache und störungssichere Trennung des Bauteilpaketes vom Bauteilstapel erzielt wird. Darüberhinaus können unabhängig von der jeweils vorrätigen Größe des Bauteilstapels Bauteilpakete in der jeweils gewünschten Höhe bzw. Dicke abgeschoben werden. Weiters zeichnet sich diese Einrichtung vor allem durch die rasche Umstellbarkeit auf verschieden hohe Bauteilpakete aus, sodaß sie universell für die Herstellung von Ankerpaketen, z. B. für Motoren mit unterschiedlichen Leistungen, verwendbar ist. Weiters werden durch die sinnvolle Anordnung und Ausbildung des Trennanschlages und dessen Verstellweges Verklemmungen von einzelnen Bauteilen beim Abschieben von Bauteilpaketen und somit Beschädigungen dieser Bauteile vermieden. Ein besonderer weiterer Vorteil liegt bei dieser Ausführungsform der erfindungsgemäßen Einrichtung auch darin, daß die Bauteilstapel während der Entnahme des Bauteilpaketes mit einer Druckkraft belastet werden können, sodaß die gewünschte Höhe des Bauteilpaketes bereits unter jenen Bedingungen ermittelt werden kann, unter welchen das Bauteilpaket, beispielsweise wenn es sich um Lamellen für einen Elektromotor handelt, auf die Ankerwelle aufgepreßt wird.

Gemäß einem weiteren sehr wesentlichen Merkmal der Erfindung ist vorgesehen, daß eine Führungsvorrichtung der Entnahmevorrichtung vertikal und die Führungsbahn für den Bauteilstapel horizontal ausgerichtet ist und daß vorzugsweise die der Führungsbahn zugewendeten unteren Umfangsflächen der Bauteile auf einer nur mit einem Teil der Umfangsfläche in Berührung stehenden Führungsleiste geführt sind. Diese Anordnung erleichtert das Zuführen weiterer Bauteilstapel sowie das Entnehmen der Bauteilpakete dadurch, daß die Bauteilstapel in vertikaler Richtung, nämlich in Richtung der Schwerkraft, ständig aufliegen. Darüberhinaus wird das Ausrichten und Zusammenpressen der Bauteilstapel durch die speziell ausgebildete Führungsbahn für diese Bauteile erleichtert. Durch die praktisch linienförmige Auflage der Bauteile kann bei deren Schrägstellung gegenüber der Vertikalen durch das Aufbringen einer Druckkraft eine Ausrichtung in der gewünschten Richtung erfolgen.

Im Rahmen der Erfindung ist es weiters auch möglich, daß ein Teil der Führungsbahn durch ein Magazin für einen Bauteilstapel gebildet ist und daß die unteren Umfangsflächen der Bauteile auf einer sich nur über einen Teil der gesamten Bauteilbreite erstreckenden Führungsleiste aufliegen, wobei die den vertikalen Umfangsflächen zugeordneten Führungen einen größeren Abstand voneinander aufweisen als die Abmessung der Bauteile in dieser Richtung. Diese Ausführung ermöglicht es, die Führungsbahn relativ kurz zu halten und trotzdem einen großen Vorrat an Bauteilen im Bereich der Entnahmevorrichtung vorzusehen. Dadurch kann die Leistung der gesamten Einrichtung hoch gehalten werden, da sie unabhängig von dem Aufeinanderstapeln einzelner Bauteile zu einem Bauteilstapel ist. Durch die spezielle Ausbildung und Anordnung der Führungsleisten kann sichergestellt werden, daß die Bauteile jeweils in eine exakt senkrecht zur Führungsbahn verlaufenden Ebene gehalten werden, wodurch Verklemmungen beim Entnehmen eines Bauteilpaketes mit der Entnahmevorrichtung zwischen den Bauteilen und dem Trennanschlag ausgeschaltet werden.

Erfindungsgemäß kann weiters die Form der Führungsleisten an die Umfangsform von im Außenumfang der Bauteile vorgesehenen Ausnehmungen angepaßt sein, wodurch die Bauteile nicht nur hinsichtlich ihrer plattenförmigen Stirnfläche, sondern auch in ihrer radialen Richtung gleichzeitig ausgerichtet, der Entnahmevorrichtung zugeführt werden können.

Vorteilhaft ist eine Ausführungsform der Erfindung, bei der dem Trennanschlag mechanisch einstellbare Endanschläge zugeordnet sind, wodurch eine gewünschte Höhe bzw. Dicke des Bauteilpaketes auch bei einer oftmaligen Reproduzierung von Einzelbewegungen und sehr rasch eine Anpassung auf unterschiedliche Bauteilpakethöhen bzw. -dicken erreicht werden kann.

Weiters ist es möglich, daß der Trennanschlag in Rückstellrichtung bzw. ein in der Rückstellrichtung dem Trennanschlag zugeordneter Endanschlag elastisch gelagert ist. Damit können Dickentoleranzen bzw. Verwerfungen durch vorhergehende Stanzvorgänge im Bereich der plattenförmigen Stirnflächen der Bauteile einfach ausgeglichen werden.

Vorteilhaft ist eine Ausführungsform der Erfindung, bei der die Entnahmevorrichtung durch ein geradlinig verstellbares Führungsbahnteilstück gebildet ist und daß vorzugsweise der — insbesondere einstellbare — Anschlag auf dem Führungsbahnteilstück angeordnet ist, wodurch ein einfacher Aufbau der Entnahmevorrichtung und eine Entnahme der Bauteile mit einer geringstmöglichen Anzahl von Manipulationsvorgängen möglich ist.

Im Rahmen der Erfindung ist es auch möglich, daß das Führungsbahnteilstück einen Teil einer Aufnahmekammer für ein Bauteilpaket bildet und die Aufnahmekammer über die Länge der Führungsvorrichtung durch eine an den Trennanschlag anschließende Führungsfläche abgeschlossen ist, wodurch in einfacher Weise die richtige Orientierung und Ausrichtung der einzelnen Bauteile im Bauteilpaket auch während des Trennens desselben aus einem Bauteilstapel beibehalten werden kann.

Gemäß einer weiteren Ausführungsform der Erfindung ist vorgesehen, daß im Anschlag bzw. in der diesem zugewandten Stirnseite der Aufnahmekammer sowie in der der Aufnahmekammer zugeordneten Führungsfläche im Endbereich der Führungsvorrichtung jeweils eine Ausnehmung angeordnet ist, sodaß der Bauteilstapel in vorgespannter Form und der richtigen Orientierung unmittelbar aus der Aufnahmekammer der Entnahmevorrichtung entnommen werden kann.

Eine weitere Ausführungsvariante der Erfindung sieht vor, daß dem Verstellantrieb der Entnahmevorrichtung ein Verstellkraftgeber zugeordnet ist, der über einen Grenzwertmelder einer Steuervorrichtung mit dem Ventil des Trennanschlag-Verstellantriebes bzw. dem Verstellantrieb verbunden ist. Damit wird in einfacher Weise eine beschädigungsfreie Entnahme der Bauteile erreicht, da bei einem Verklemmen eines Bauteiles im Bereich des Trennanschlages dieser senkrecht zu der plattenförmigen Stirnfläche der Bauteile geringfügig verstellt werden kann, sodaß ein leichtes und beschädigungsfreies Ausschieben des Bauteilpaketes möglich ist.

Von Vorteil ist auch eine Ausführungsform der Erfindung, bei der einer Entnahmevorrichtung in dem von der Führungsbahn distanzierten Bereich eine Handhabungseinrichtung mit einem Entnahmegreifer für ein Bauteilpaket zugeordnet ist, dessen Entladestellung im Bereich eines Werkstückträgers eines Transfersystems angeordnet ist. Das Bauteilpaket kann dadurch in der gewünschten Lage durch einen einzigen Manipulationsweg in ein Transfersystem zur Weiterbehandlung, insbesondere zum Einpressen der Ankerwelle, weiterbefördert werden.

Besondere Vorteile bringt die erfindungsgemäße Lösung bei Bauteilen, die eine Aufnahmebohrung aufweisen und in Richtung der Mittellängsachse der Aufnahmebohrungen ausgerichtet sind. Eine derartige Ausführungsform ist dadurch gekennzeichnet, daß die Mittellängsachse der Aufnahmebohrungen des Bauteilstapels horizontal und vorzugsweise senkrecht zur Förderrichtung des Transfersystems ausgerichtet ist und daß eine Handhabungsvorrichtung zum Einführen einer Welle, insbesondere einer Ankerwelle, in die Aufnahmebohrungen angeordnet ist. Dadurch können Wendevorgänge des Bauteilpaketes bei der Zufuhr zum Transfersystem bzw. zur Einpreßvorrichtung für die Ankerwelle mit Vorteil ausgeschaltet werden und die Ankerwelle kann einfach zum Bauteilpaket, welches auf dem Werkstückträger fixiert ist, zugeführt und ohne daß der Werkstückträger aus der Führungsbahn des Transfersystem herausgehoben werden muß, in das Bauteilpaket eingepreßt werden.

Im Rahmen der Erfindung ist es weiters auch möglich, daß der Handhabungsvorrichtung in Förderrichtung des Transfersystems eine Bearbeitungsstation nachgeordnet ist, die eine Zentriervorrichtung, insbesondere eine Zentriergabel, die in am Umfang der Bauteile angeordnete Ausnehmungen eingreift, aufweist sowie eine insbesondere hydraulische Preßvorrichtung mit einer Ankerwellenzentriervorrichtung umfaßt und daß vorzugsweise die Preßvorrichtung eine Vorpreßeinheit für das Bauteilpaket sowie eine Hauptpreßvorrichtung zum Einpressen der Ankerwelle in das Bauteilpaket aufweist, wobei insbesondere die Mittellängsachse der Aufnahmebohrungen des Bauteilpaketes horizontal und zentrisch zu den horizontal ausgerichteten Preßstempeln der Vorpreßeinheit und Hauptpreßvorrichtung ausgerichtet sind. Durch die Nachschaltung einer weiteren Bearbeitungsstation, die mit der Einlegestation des Bauteilpaketes über ein Transfersystem verbunden ist, ist ein Taktzeitgewinn bei der Herstellung von Ankerpaketen für Elektromotoren erzielbar, wobei durch die spezielle Anordnung der Zentrier- und Preßvorrichtung ein ordnungsgemäßes und ungestörtes Bewickeln der Anker möglich wird und überdies während des Einpressens der Ankerwelle eine Verlagerung der Bauteile untereinander im Bauteilpaket mit Sicherheit ausgeschaltet ist.

Weiters ist es möglich, daß auf dem Werkstückträger des Transfersystems Klemmbacken für die Aufnahme des Bauteilpaketes angeordnet sind, und daß einer der Klemmbacken in Längsrichtung der Mittellängsachse der Aufnahmebohrungen des Bauteilpaketes über ein Vorspannglied vorgespannt ist, wodurch Verlagerungen der einzelnen Bauteile im Bauteilpaket während des Transfers von einer Bearbeitungsstation zur anderen verhindert werden.

Schließlich ist es im Rahmen der Erfindung auch möglich, daß im Bereich der Einlegestation des Bauteilpaketes dem Werkstückträger eine entgegen dem Vorspannglied der Klemmbacke gerichtete Öffnungsvorrichtung zugeordnet ist, wodurch ein unbehindertes Einsetzen des Bauteilpaketes in der gewünschten Orientierung bzw. Lage in den Werkstückträger erreicht wird.

Zum besseren Verständnis der Erfindung wird diese im folgenden anhand der in den Zeichnungen dargestellten Ausführungsbeispiele näher erläutert.

Es zeigen

Figur 1 eine erfindungsgemäße Einrichtung zur Herstellung von Bauteilpaketen, die einem Transfersystem zugeordnet ist, in Draufsicht;

Figur 2 eine Entnahmevorrichtung einer erfindungsgemäß ausgebildeten Einrichtung zum Herstellen von Bauteilpaketen in vereinfachter schaubildlicher Darstellung;

Figur 3 die Entnahmevorrichtung gemäß Fig. 2 mit einem, die Bauteilstapel zuführenden Magazin in Seitenansicht;

Figur 4 die Entnahmevorrichtung gemäß Fig. 3 in Stirnansicht teilweise geschnitten, gemäß den Linien IV-IV in Fig. 3;

Figur 5 das Magazin für einen Bauteilstapel in Stirnansicht, teilweise geschnitten, gemäß den Linien V-V in Fig. 3;

Figur 6 eine, dem Transfersystem zugeordnete Preßvorrichtung zum Aufpressen der Bauteilpakete auf eine Ankerwelle in Seitenansicht, teilweise geschnitten, in vereinfachter Darstellung sowie im Schnitt gemäß den Linien VI-VI in Fig. 1;

Figur 7 ein Blockschaltbild der erfindungsgemäßen Einrichtung zum Herstellen von Bauteilpaketen.

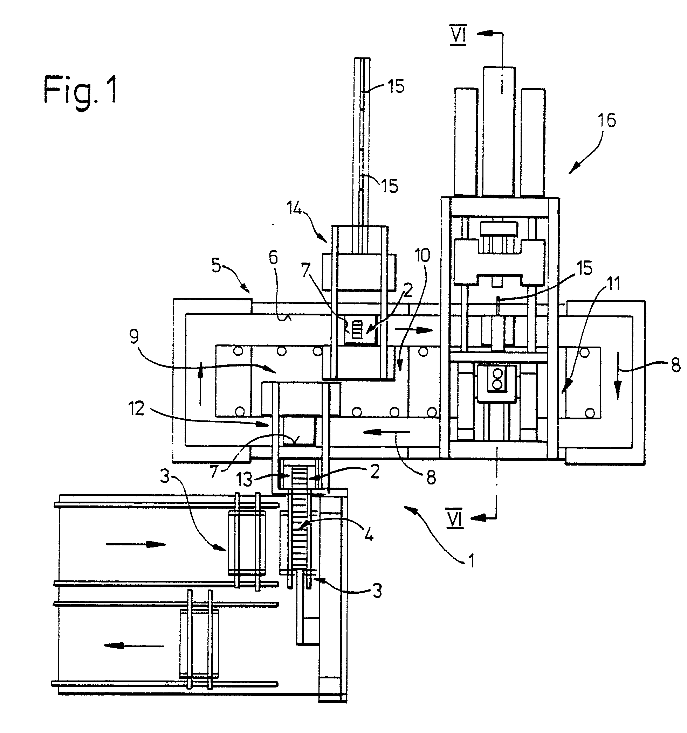

In Fig. 1 ist eine Einrichtung 1 zum Herstellen von Bauteilpaketen 2 aus über Magazine 3 zugeführten Bauteilstapeln 4 dargestellt. Dieser Einrichtung 1 ist ein Transfersystem 5 zugeordnet, welches eine Fördervorrichtung 6 aufweist, mittels welcher Werkstückträger 7 in Förderrichtung — Pfeile 8 — von einer Bearbeitungsstation 9 zu den weiteren Bearbeitungsstationen 10, 11 befördert werden. Im Bereich der Bearbeitungsstation 9 ist eine Handhabungseinrichtung 12 angeordnet, mit der die Bauteilpakete 2 aus dem Bereich einer Entnahmevorrichtung 13 der Einrichtung 1 zur Herstellung von Bauteilpaketen auf die Werkstückträger 7 verbracht werden können.

Im Bereich der Bearbeitungsstation 10 ist eine Handhabungsvorrichtung 14 angeordnet, mit welcher jeweils eine Ankerwelle 15 aus einer Zuführeinrichtung entnommen wird. Ein jenem Teil der Ankerwelle 15, die das Bauteilpaket 2 aufnimmt, benachbarter Bereich mit geringem Durchmesser wird in die Aufnahmebohrung des auf dem Werkstückträger 7 positionierten Bauteilpaketes 2 eingeschoben.

Mittels einer im Bereich der Bearbeitungsstation 11 angeordneten Preßvorrichtung 16 wird dann die Ankerwelle 15 in das Bauteilpaket 2 unter hohem Druck eingepreßt. Die Werkstückträger 7 können dann mit den auf den Ankerwellen aufgepreßten Bauteilpaketen einer Prüf- und Verpackungsstation bzw. Wickelmaschinen od. dgl. weiteren Bearbeitungsvorgängen zugeführt werden.

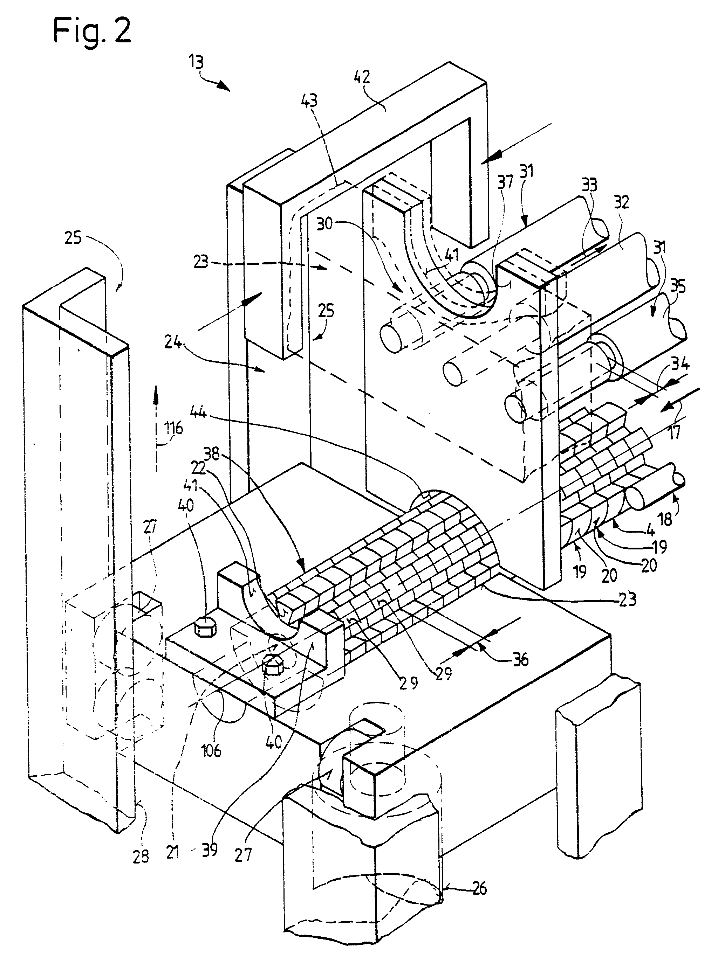

In Fig. 2 ist die Entnahmevorrichtung 13 in größerem Maßstab dargestellt. Ein Bauteilstapel 4 wird in Längsrichtung — Pfeil 17 — einer Führungsbahn 18 der Entnahmevorrichtung 13 zugeführt. Der Bauteilstapel 4 besteht aus einer Vielzahl plattenförmiger Bauteile 19, z. B. Lamellen 20 mit einer Aufnahmebohrung 21, wobei die Lamellen 20 mit ihren plattenförmigen Stirnflächen 22 senkrecht zur Längsrichtung — Pfeil 17 — der Führungsbahn 18 ausgerichtet sind. Ein Führungsbahnteilstück 23 der Führungsbahn 18 ist in einer Aufnahmekammer 24 der Entnahmevorrichtung 13 angeordnet und entlang einer Führungsvorrichtung 25 mit einem Verstellantrieb 26 verstellbar. Das Führungsbahnteilstück 23 ist in Längsrichtung — Pfeil 17 — der Führungsbahn 18 über Rollen 27 auf Führungsflächen 28 der Führungsvorrichtung 25 abgestützt. Den äußeren Umfangsflächen 29 ist in dem dem Führungsbahnteilstück 23 gegenüberliegenden Bereich der Bauteile 19 ein Trennanschlag 30 zugeordnet. Dieser Trennanschlag 30 ist auf einer Führung 31 gelagert und mit einem Verstellantrieb 32 verbunden. Die Führung 31 und der Verstellantrieb 32 verlaufen parallel zur Längsrichtung der Führungsbahn 18. Der Trennanschlag 30 ist weiters in Rückstellrichtung — Pfeil 33 — um einen Verstellweg 34 gegenüber einem Endanschlag 35 mit dem Verstellantrieb 32 bewegbar. Dabei ist der Verstellweg 34 kleiner als eine Dicke 36 eines Bauteiles 19. Der Trennanschlag 30 ist mit seiner dem beweglichen Führungsbahnteilstück 23 zugewendeten Stirnseite zugleich als Führungsfläche 37 ausgebildet. Einem Endbereich 38 des Bauteilstapels 4 ist ein Anschlag 39 zugeordnet, der in verschiedenen Stellungen entlang des Führungsbahnteilstückes 23 mit Befestigungsmitteln 40 festlegbar ist. Sowohl der Anschlag 39, als auch der Trennanschlag 30 weisen eine Ausnehmung 41 auf.

Diese Ausnehmungen 41 ermöglichen es einem Entnahmegreifer 42 der Handhabungseinrichtung 12, das zwischen der Führungsfläche 37 des Trennanschlages 30 und dem Anschlag 39 eingespannte Bauteilpaket 2 in der mit strichlierten Linien dargestellten Entladestellung 43 des Führungsbahnteilstückes 23 zu erfassen und auf einem Werkstückträger 7 abzulegen.

Im Trennanschlag 30 ist eine Öffnung 44 vorgesehen, die dem Umfangsverlauf der Bauteile 19 angepaßt ist. Zusammen mit der Führungsbahn 18 bildet sie einen Führungskanal, durch den die Bauteile der Aufnahmekammer 24 zugeführt werden.

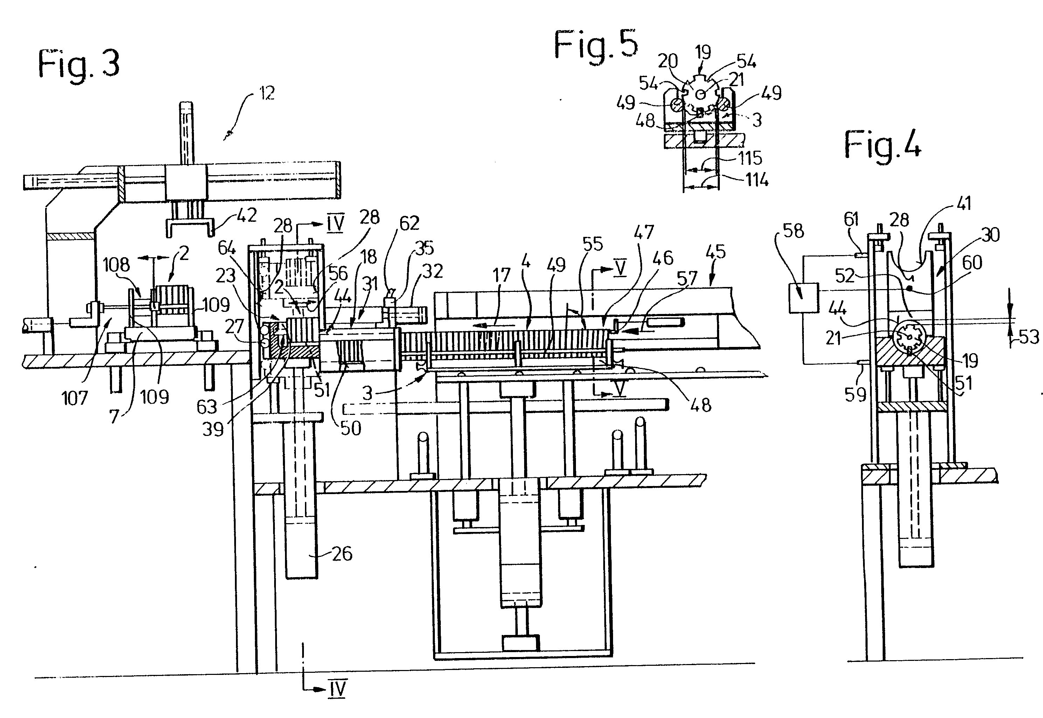

In Fig. 3 ist weiters ersichtlich, daß der Bauteilstapel 4 in einem Magazin 3 geführt ist. Mit einem Vorschubantrieb 45, dessen Mitnahmeorgan 46 einem von der Aufnahmekammer 24 abgewendeten Endbereich 47 des Bauteilstapels 4 zugeordnet ist, wird der Bauteilstapel 4 in Längsrichtung — Pfeil 17 — der Führungsbahn 18 soweit vorgeschoben, bis der vorderste Bauteil 19 am Anschlag 39 anliegt. Im Magazin 3 ist eine Führungsleiste 48 angeordnet, auf der die Bauteile 19 nur mit einem Teil ihrer äußeren Umfangsfläche 29 aufliegen. Weiters sind seitliche Führungen 49, die ein Verdrehen bzw. Kippen der Bauteile 19 verhindern, angeordnet. Die Führungsbahn 18 und das Führungsbahnteilstück 23 weisen ebenfalls der Unterseite der Bauteile 19 zugeordnete Führungsleisten 50, 51 auf.

In Fig. 4 ist ersichtlich, daß der Trennanschlag 30 einen Trennteil 52 sowie die Führungsfläche 28 mit der darin angeordneten Ausnehmung 41 umfaßt. Im Trennteil 52 ist die Öffnung 44 angeordnet, wobei — wie ersichtlich — deren Umfangform der Umfangform der Bauteile 19 angepaßt ist. Zwischen dem Außenumfang der Bauteile 19 sowie der Öffnung 44 ist jedoch ein Abstand 53 vorgesehen. Weiters ist ersichtlich, daß die Bauteile 19 auch im Bereich des Führungsbahnteilstückes 23 der Höhe nach nur auf der Führungsleiste 51 geführt sind.

Aus Fig. 5 ist ersichtlich, daß die Bauteile 19 im Bereiche des Magazines 3 der Höhe nach ebenfalls ausschließlich auf der Führungsleiste 48 geführt sind. Es ist daher bei genau exakt senkrechter Ausrichtung der Bauteile 19 zur Längsrichtung — Pfeil 17 — der Führungsbahn 18 eine Distanz zwischen den Führungen 49 und dem Außenumfang der Bauteile 19, der mit Ausnehmungen 54 versehen ist, gegeben.

Wie nun besser aus Fig. 3 ersichtlich, kommt es beim Einschieben der Bauteilstapel 4 vom Magazin 3 auf die Führungsbahn 18 oftmals zu einem Schrägstellen der Bauteile 19 gegenüber der Führungsbahn, sodaß diese, wie mit strichlierten Linien angedeutet, einen Winkel 55 zur Längsrichtung — Pfeil 17 — der Führungsbahn 18 einschließen, der kleiner ist als 90°. Würden die Bauteile 19 in der mit strichlierten Linien angedeuteten schrägen Stellung verbleiben, so würde die Länge 56 des Bauteilpaketes zwischen dem Anschlag 39 und der Führungsfläche 28 nach der Entnahme des Bauteilpaketes nicht dem gewünschten Ausmaß entsprechen. Überdies könnte es dadurch zu Verklemmungen von Bauteilen 19 zwischen dem Führungsbahnteilstück 23 und der Öffnung 44 im Trennteil 52 des Trennanschlages 30 kommen. Mittels des Vorschubantriebes 45, der z. B. durch eine pneumatisch oder hydraulisch beaufschlagbare Zylinderkolben-Anordnung gebildet sein kann, kann nun eine Druckkraft 57 auf den Bauteilstapel 4 ausgeübt werden. Durch diese Druckkraft 57 werden die Bauteile 19 nunmehr um ihre Auflagestelle auf den Führungsleisten 48, 50, 51 in die mit vollen Linien gezeichnete Stellung verschwenkt. Durch die Freistellung zwischen den seitlichen Führungen 49 und dem Außenumfang der Bauteile 19 sowie dem Abstand 53 zwischen der Öffnung 44 und den Bauteilen 19 wird dieses Aufrichten der Bauteile nicht behindert.

In Fig. 4 ist ersichtlich, daß einer Steuervorrichtung 58 im Bereich der Entnahmevorrichtung 13 mit dem Führungsbahnteilstück 23 zusammenwirkende Überwachungsorgane 59, 60, 61 zugeordnet sind, die die untere Endstellung, eine Mittelstellung und die obere Endstellung des Führungsbahnteilstückes 23 signalisieren. Weiters ist im Bereich der Führung 31 für den Trennanschlag 30 im Endanschlag 35 ein Überwachungsorgan 62 angeordnet, mit dem überwacht werden kann, ob sich der Verstellantrieb 32 in der in Fig. 3 gezeigten ausgefahrenen oder in einer eingefahrenen Stellung befindet. Mit einem Überwachungsorgan 63 im Bereich des Anschlages 39 kann weiters festgestellt werden, ob in der Aufnahmekammer 24 bzw. am Führungsbahnteilstück 23 Bauteile 19 vorrätig sind und diese satt am Anschlag 39 anliegen.

Wie in Fig. 3 weiters schematisch angedeutet — zum besseren Verständnis in übertriebener Darstellung — ist den Rollen 27 im Bereich oberhalb der im Trennanschlag 30 angeordneten Öffnung 44 eine gegenüber der Führungsfläche 28 zurückgesetzte — vom Trennanschlag 30 in größerer Distanz angeordnete — Führungsbahn 64 zugeordnet. Dadurch stützt sich solange die Druckkraft 57 gegen den Anschlag 39, wirkt das Führungsbahnteilstück 23 über die Rollen 27 auf der Führungsfläche 28 ab, sodaß nur der Rollwiderstand zu überwinden ist. Nachdem die Rollen 27 die Führungsbahn 64 erreicht haben, kann sich das Bauteilpaket 2 entspannen und das Führungsbahnteilstück 23 gleitet nur mehr durch die Eigenspannung im Bauteilpaket 2 an die Führungsfläche 28 angelegt in die obere Endstellung — strichlierte Darstellung. Die untere Endstellung ist in strichpunktierten Linien dargestellt.

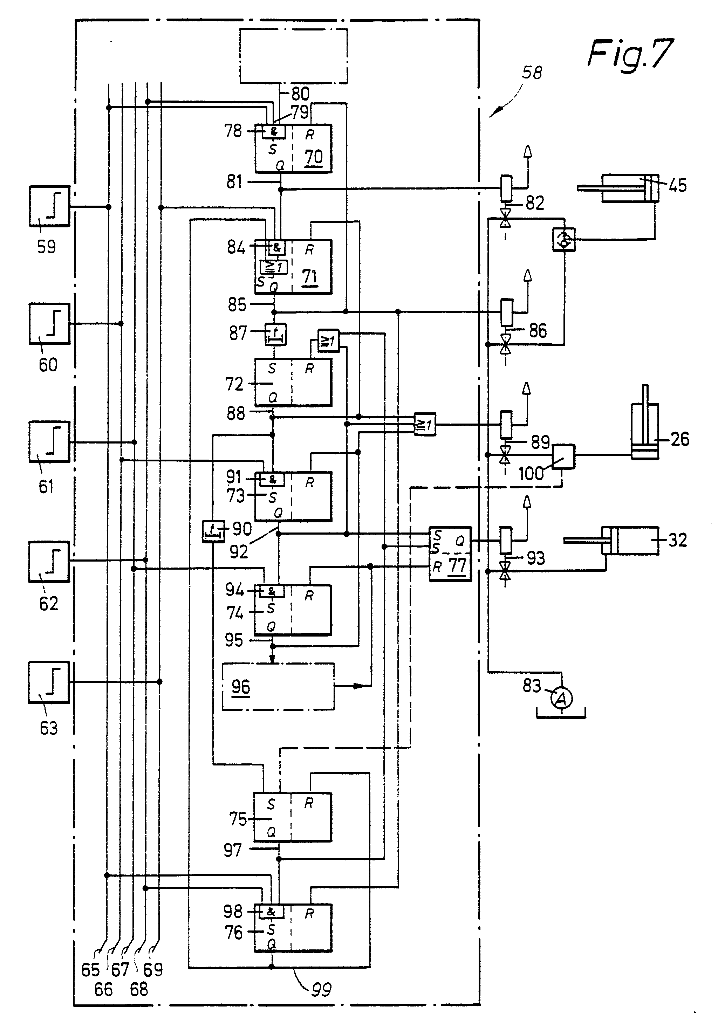

In Fig. 7 ist ein Blockschaltbild einer Steuervorrichtung 58 gezeigt. Die Überwachungsorgane 59 bis 63 sind mit Signalleitungen 65 bis 69 verbunden. Weiters weist die Steuervorrichtung 58 Schaltglieder 70 bis 77 auf, die beispielsweise durch Flip-Flops gebildet sind.

Die Funktion der Steuervorrichtung 58 ist nun folgendermaßen : Befindet sich das Führungsbahnteilstück 23 in der in Fig. 2 gezeigten unteren Stellung, so ist der Ausgang des Überwachungsorganes 59, z. B. eines elektromagnetischen Näherungsschalters, beaufschlagt. Befindet sich weiters der Verstellantrieb 32 für den Trennschlag 30 in seiner in Fig. 2 und 3 mit vollen Linien gezeichneten vorderen Stellung, so liegt am Ausgang des Überwachungsorganes 62 kein Signal an. Bei dem vorstehend geschilderten Schaltzustand der Überwachungsorgane 59 und 62 liegt an den Eingängen eines Und-Gatters 78 ein Signal an, da die mit dem Überwachungsorgan 62 verbundene Signalleitung 68 über einen Inverter 79 an das Und-Gatter 78 angeschlossen ist. Kommt nun von einer vorgeordneten Steuereinheit, beispielsweise der Handhabungsvorrichtung bzw. dem Transfersystem ein Freigabesignal, welches den Trennvorgang für ein Bauteilpaket auslöst, so wird dies über eine Signalleitung 80 ebenfalls dem Und-Gatter 78 zugeführt. Liegt an allen drei Eingängen des Und-Gatters 78 ein Signal an, so liegt am Ausgang 81 desselben ebenfalls ein Signal an. Über dieses Signal wird ein Ventil 82 beaufschlagt, welches von einer Druckmittelquelle 83 kommendes Druckmedium, z. B. Druckluft oder Hydrauliköl, dem Vorschubantrieb 45 — Fig. 3 — zuführt.

Ist der Bauteilstapel 4 mittels des Vorschubantriebes 45 dann soweit vorgeschoben, daß der vorderste Bauteil am Anschlag 39 des Führungsbahnteilstückes 23 zur Anlage kommt, so gibt das Überwachungsorgan 63 — Fig. 3 — ein Ausgangssignal an die Signalleitung 69 ab. In diesem Fall liegt dann an beiden Eingängen eines Und-Gatters 84 des Schaltgliedes 71 ein Signal an, wodurch über eine Signalleitung 85 das Schaltglied 70 rückgestellt und ein Ventil 86 sowie ein Zeitglied 87 angesteuert wird. Über das Ventil 86 wird dem Vorschubantrieb 45 nunmehr Druckmittel mit verringertem Druck zugeführt. Nach Ablauf des am Zeitglied 87 voreinstellbaren Zeitintervalles wird das Schaltglied 72 erregt, sodaß ein Signal an die Signalleitung 88 abgegeben wird. Über diese Signalleitung 88 wird das Schaltglied 71 rückgestellt, wodurch der Vorschubantrieb 45 drucklos wird. Gleichzeitig wird ein Ventil 89 umgeschaltet, sodaß dem Verstellantrieb 26 — Fig. 2 und 3 — Druckmittel zugeführt wird. Gleichzeitig wird ein Zeitglied 90 angesteuert. Passiert vor Ablauf des am Zeitglied 90 eingestellten Zeitintervalles das Führungsbahnteilstück 23 das Überwachungsorgan 60, so wird von diesem ein Signal an die Signalleitung 66 abgegeben, sodaß an einem Und-Gatter 91 an beiden Eingängen sowohl von der Signalleitung 88 als auch von der Signalleitung 66 ein Signal anliegt und damit auch über den Ausgang eine Signalleitung 92 beaufschlagt wird. Durch den Impuls in der Signalleitung 92 wird das Schaltglied 72 in seine Ausgangsstellung zurückgestellt und gleichzeitig das Schaltglied 77 angesteuert. Durch das von Schaltglied 77 abgegebene Steuersignal wird ein Ventil 93 derart verstellt, daß Druckmittel dem Verstellantrieb 32 — Fig. 2 und 3 — zugeführt und der Trennanschlag 30 um den Verstellweg 34, der geringer ist als die Dicke 36 eines Bauteiles 19 verschoben wird. Dadurch wird die Vorpressung auf das Bauteilpaket 2 verringert, da mit dem Trennanschlag 30 auch die Führungsfläche 37 gegenüber dem Führungsbahnteilstück 23 um den Verstellweg 34 zurückgezogen wird und die Gefahr von Verklemmungen im Endbereich der Trennbewegung des Bauteilpaketes 2 vom Bauteilstapel 4 wird vermieden.

Erreicht das Führungsbahnteilstück 23 die obere Endstellung der Führungsvorrichtung 25, so wird dies durch das Überwachungsorgan 61 — Fig. 4 — festgestellt und vom Überwachungsorgan 61 ein Signal an die Signalleitung 67 abgegeben. Durch das Vorliegen eines Signales in der Signalleitung 67 und 92 wird ein Und-Gatter 94 des Schaltgliedes 74 gesetzt. Durch das Signal in der an den Ausgang des Schaltgliedes 74 anschließenden Signalleitung 95 wird das Schaltglied 73 zurückgestellt und die Beaufschlagung des Ventiles 89 unterbrochen. Gleichzeitig wird ein Freimeldesignal einer Steuereinheit 96 für die der Entnahmevorrichtung 13 nachgeordnete Handhabungseinrichtung 12 abgegeben. Dies bewirkt, daß der Entnahmegreifer 42 abgesenkt und mit diesem das Bauteilpaket 2 erfaßt und auf dem Werkstückträger 7 abgesetzt wird. Nach Abschluß der Entnahmebewegung mit dem Entnahmegreifer 42 wird von der Steuereinheit 96 ein Rückstellsignal an die Schaltglieder 74 und 77 abgegeben, wodurch das Ventil 93 die Druckmittelzufuhr zum Verstellantrieb 32 unterbricht. Dadurch bewegt sich der Trennanschlag 30 wieder in seine — in Fig. 2 und 3 in vollen Linien gezeichnete — Ausgangsstellung.

Überfährt das Führungsbahnteilstück 23 jedoch nach dem mit dem Zeitglied 90 eingestellten Zeitintervall nicht das Überwachungsorgan 60 — Fig. 4 —, so wird ein Schaltglied 75 erregt, dessen Ausgangssignal über eine Signalleitung 97 den Rückstelleingang des Schaltgliedes 72 beaufschlagt, wodurch die Druckmittelzufuhr zum Verstellantrieb 26 mittels des Ventiles 89 unterbrochen wird. Passiert nämlich das Führungsbahnteilstück 23 nach dem mit dem Zeitglied 90 voreingestellten Zeitintervall nicht das Überwachungsorgan 60, so muß angenommen werden, daß sich ein Bauteil 19 mit einer Umfangsfläche 29 zum Teil noch im Bereich der Öffnung 44 des Trennanschlages 30 befindet und dadurch die Aufwärtsbewegung des Führungsbahnteilstückes 23 blockiert. Durch die Unterbrechung der Druckmittelzufuhr zum Verstellantrieb 26 bewegt sich dieser in seine untere Ausgangsstellung zurück und es wird gleichzeitig durch die Beaufschlagung des Schaltgliedes 77 über die Signalleitung 97 das Ventil 93 beaufschlagt. Damit wird Druckmittel von der Druckmittelquelle 83 dem Verstellantrieb 32 zugeführt, deren Trennanschlag 30 sich aus der in Fig. 2 in vollen Linien gezeichneten Stellung um den Verstellweg 34 in die mit strichlierten Linien gezeichnete rückwärtige Stellung zurückzieht. Nachdem der Verstellweg 34 geringfügig kleiner ist als die Dicke 36 eines Bauteiles 19, wird somit die obere Umfangsfläche des sich zum Teil in der Öffnung 44 und zum Teil in der Aufnahmekammer 24 befindenden Bauteiles 19 freigegeben.

Hat nun der Verstellantrieb 26 seine in Fig. 3 gezeigte untere Endstellung erreicht, so gibt das Überwachungsorgan 59 ein Signal an die Signalleitung 65 ab. Gleichzeitig wird nach dem Zurückziehen des Trennanschlages 30 in seine hintere Endstellung das Überwachungsorgan 62 an die Signalleitung 68 ein Signal abgeben, sodaß von den Signalleitungen 65, 68 und 97 ein Signal an einem Und-Gatter 98 des Schaltgliedes 76 anliegt. Das dadurch hervorgerufene Ausgangssignal in der Signalleitung 99 bewirkt eine Rückstellung des Schaltgliedes 75 sowie eine Beaufschlagung des Schaltgliedes 71, wodurch die Signalleitung 85 mit einem Signal beaufschlagt wird. Über das Ventil 86 wird damit der Vorschubantrieb 45 mit geringem Druck vorgespannt. Der weitere Ablauf des Trennvorganges verläuft dann wie bereits vorstehend geschildert.

Durch die Rückstellung des Schaltgliedes 71 bei Auftreten eines Signales in der Signalleitung 88 wird sichergestellt, daß mit dem Beginn der Trennbewegung, d. h., also der Hubbewegung des Führungsbahnteilstückes 23, und somit mit dem Trennen des Bauteilpaketes 2 vom Bauteilstapel 4 die Vorspannung — Druckkraft 57 — weggeschaltet wird, wodurch das Ausschieben des Bauteilpaketes 2 erleichtert wird. Vor allem können sich der mit seiner oberen Umfangsfläche freigegebene Bauteil sowie der durch die Öffnung 44 zurückgehaltene Bauteil, auch wenn diese beispielsweise durch einen vorhergehenden Stanzvorgang oder dgl. gewölbt bzw. geschüsselt sind, leichter voneinander trennen. In Verbindung mit der Rückstellbarkeit des Trennanschlages 30 werden Verklemmungen von Bauteilen zwischen dem Führungsbahnteilstück 23 und dem Trennanschlag 30 hinreichend vermieden.

Im Rahmen der Erfindung ist es selbstverständlich auch möglich, daß anstelle des Zeitgliedes 90 ein Grenzwertmelder 100, z. B. ein Druckschalter od. dgl., in der Druckmittelzuleitung zum Verstellantrieb 26 angeordnet ist. Kommt es zu einer Verklemmung zwischen einem Bauteil und dem Trennanschlag 30, so wird dies aufgrund des Druckanstieges in der Druckmittelzuleitung im Grenzwertmelder 100 erfaßt und der Eingang des Schaltgliedes 75 wird, wie mit strichlierten Linien angedeutet, dann direkt von dem Grenzwertmelder 100 beaufschlagt. Die Verbindung zwischen der Signalleitung 88 und dem Eingang des Schaltgliedes 75 kann dann entfallen. Die übrige Funktion der Steuervorrichtung 58 wird unverändert beibehalten. Weiters ist es selbstverständlich auch möglich, anstelle der beschriebenen Schaltungsorgane Schaltglieder, Und-Gatter und dgl., entsprechend andere Bauteile, wie Relais, integrierte Schaltkreise oder einen Mikroprozessor einzusetzen. Wesentlich ist lediglich, daß die beschriebenen Beaufschlagungen der einzelnen Antriebe in der geschilderten Aufeinanderfolge und in Abhängigkeit von den beschriebenen Eingangsfunktionen vorgenommen werden.

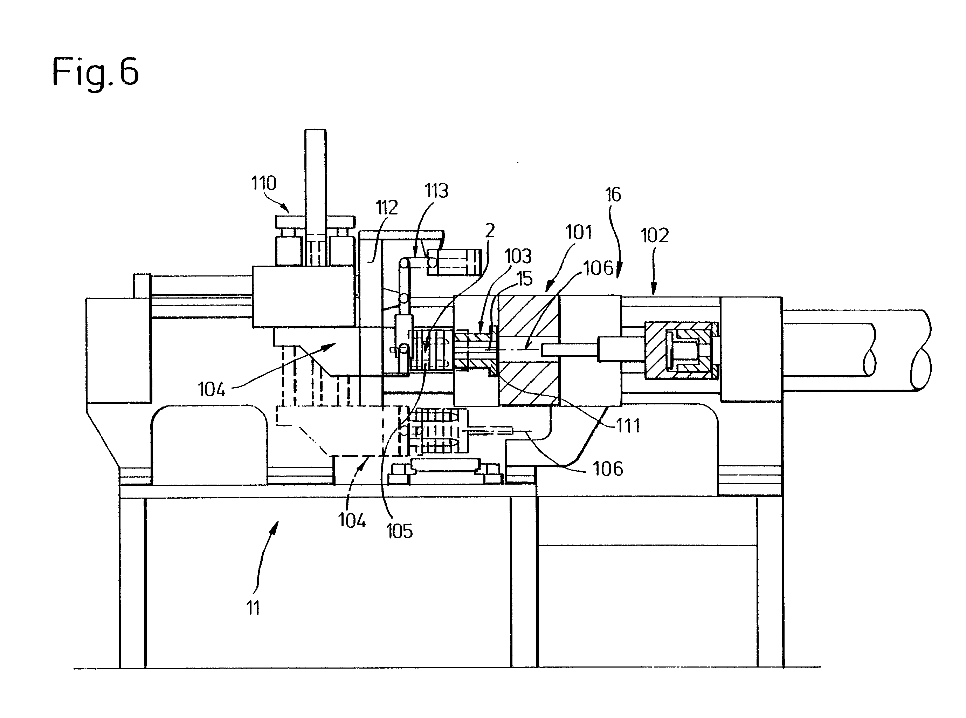

In Fig. 6 ist weiters die der Bearbeitungsstation 11 zugeordnete Preßvorrichtung 16 gezeigt. Diese Preßvorrichtung 16 besteht aus einer Vorpreßeinheit 101, einer Hauptpreßvorrichtung 102 sowie einer Ankerwellenzentriervorrichtung 103.

Weiters ist eine Zentriervorrichtung 104 für die Bauteile 19 bzw. die Lamellen 20 vorgesehen. Diese Zentriervorrichtung 104 weist eine Zentriergabel 105 auf, die mittels Zentrierstiften in die über den Umfang verteilten Ausnehmungen 41 der Lamellen 20 eingreift und diese sowohl in Richtung einer Mittellängsachse 106 der Aufnahmebohrungen als auch radial zur Mittellängsachse 106 ausrichtet.

Die Arbeitsweise der Preßvorrichtung 16 ist nun folgendermaßen : Nachdem ein Werkstückträger 7 mit einem Bauteilpaket 2 und einer in den Aufnahmebohrungen 21 der Lamellen 20 lose eingesetzten Ankerwelle im Bereich der Bearbeitungsstation 11 eingelangt ist, werden mittels einer Öffnungsvorrichtung 107 — Fig. 3 — entgegen der Wirkung eines am Werkstückträger 7 angeordneten Vorspanngliedes 108 Klemmbacken 109, die das Bauteilpaket 2 in Richtung der Mittellängsachse 106 der Aufnahmebohrungen 21 festhalten, geöffnet. Dann wird die Zentriergabel 105 der Zentriervorrichtung 104 in Richtung der Mittellängsachse 106 über das Bauteilpaket 2 geschoben und dabei die Lamellen 20 sowohl in Längsrichtung der Mittellängsachse, als auch in radialer Richtung zu derselben ausgerichtet. Dies ist in Fig. 7 mit strichlierten Linien dargestellt. Danach wird das Bauteilpaket 2 mit der in den Aufnahmebohrungen 21 eingesetzten Ankerwelle 15 mit der Zentriergabel 105, die auf einem Ausleger einer Handhabungsvorrichtung 110 angeordnet ist, vom Werkstückträger 7 abgehoben und in den Bereich der Preßvorrichtung 16 verbracht. Daran anschließend wird mit einem Preßstempel 111 der Vorpreßeinheit 101 die Ankerwelle 15 auf die Mittellängsachse 106 der Aufnahmebohrungen 21 zentriert und das Bauteilpaket 2 zusammengepreßt. Diese Stellung ist in Fig. 7 in vollen Linien dargestellt. Die Zentriergabel wird mit dem Preßstempel 111 in Längsrichtung der Mittellängsachse 106 in Richtung eines Widerlagers 112 verschoben, bis sie an diesem anliegt. Dadurch stützt sich das Bauteilpaket 2 während des nachfolgenden Einpressens der Ankerwelle 15 auf dem Widerlager 112 ab und es werden Beschädigungen der Handhabungsvorrichtung 110 vermieden. Daran anschließend wird die Ankerwelle 15 mit der Hauptpreßvorrichtung 102 unter hohem Druck in die Aufnahmebohrungen 21 des Bauteilpaketes eingepreßt.

Nach Abschluß des Preßvorganges wird die Zentriergabel 105 über einen Mitnahmestift mit einem Rücksteller 113 in eine mit der Werkstückaufnahme des Werkstückträgers 7 fluchtende Stellung verbracht — strich-punktierte Linien — und die Ankerwelle 15 mit dem aufgepreßten Bauteilpaket 2 am Werkstückträger 7 abgelegt sowie der nächsten Bearbeitungsstation bzw. einer Verpackungs- oder Entnahmeeinheit zugeführt.

Für das Aufrichten der Bauteile 19, insbesondere der Lamellen 20, wenn es sich dabei um stark gefettete Stanzteile handelt, ist es vorteilhaft, wenn ein Abstand 114 — Fig. 5 — zwischen den den vertikalen Umfangsflächen 29 zugeordneten Führungen 49 größer ist als eine Abmessung 115 der Bauteile 19 in derselben Richtung quer zur Längsrichtung · — Pfeil 17 — der Führungsbahn 18. Dazu ist zu berücksichtigen, daß das Aufrichten noch zusätzlich erleichtert wird, wenn die Bauteile nicht über die gesamte Breite der der Führungsbahn zugewandten unteren Umfangsflächen 29, sondern nur über einen Teil dieser Fläche auf den Führungsleisten 48, 50, 51 aufliegen.

Von besonderem Vorteil ist es für die erfindungsgemäße Einrichtung 1 zum Herstellen von Bauteilpaketen, wenn die Mittellängsachse 106 eines Bauteilpaketes 2 bzw. des Bauteilstapels 4 horizontal verläuft und die Bewegungsrichtung — Pfeil 116 — des Führungsbahnteilstückes 23 der Entnahmevorrichtung 13 dazu senkrecht in vertikaler Richtung verläuft. Die Bauteilpakete 2 können dann mit gleichbleibendem horizontalen Verlauf der Mittellängsachse 106 auf die Werkstückträger 7 verladen werden, wobei vorzugsweise die Mittellängsachse 106 quer zur Förderrichtung — Pfeil 8 — des Transfersystems 5 ausgerichtet ist. Dies vereinfacht das Einschieben der Ankerwellen 15 aus seitlich neben den Bearbeitungsstationen befindlichen Vorratsbehältern sowie die Anordnung der Preßvorrichtung 16. Somit kann bei der Herstellung von Bauteilpaketen 2 bzw. dem Aufpreßen der Lamellen 20 auf Ankerwellen 15 mit einem geringeren Platzbedarf das Auslangen gefunden werden.

Die Öffnungsvorrichtung 107, wie sie im Zusammenhang mit der Bearbeitungsstation 11 beschrieben wurde, kann auch im Bereich der Bearbeitungsstation 9 zum Einlegen des Bauteilpaketes in den Werkstückträger 7 vorgesehen sein. Wenn die Zentriergabel 105 der Zentriervorrichtung stark genug ausgebildet ist, kann die Öffnungsvorrichtung 107 im Bereich der Bearbeitungsstation 11 auch wegfallen.

## Patentansprüche

1. Einrichtung (1) zur Herstellung von Paketen aus plattenförmigen Bauteilen (19), insbesondere Lamellen (20) mit Achsialbohrungen, zum Aufpressen auf Ankerwellen (15), bei der die Bauteile (19) mit einer plattenförmigen Stirnfläche (22) senkrecht zur Längsrichtung (17) einer Führungsbahn (18) geführt sind und einem Endbereich eines Bauteilstapels (4), ein insbesondere als Preßvorrichtung (16) dienender Vorschubantrieb (45) und dem gegenüberliegenden Endbereich (38) ein Anschlag (39) sowie eine mit einem Verstellantrieb (26) verstellbar gelagerte Vorrichtung (13) zur Aufnahme des Bauteilpaktes (2) zugeordnet ist, dadurch gekennzeichnet, daß diese Vorrichtung (13) zur Aufnahme des Bauteilpaketes (2) als Entnahmevorrichtung (13) ausgebildet ist und auf der in Bewegungsrichtung der Entnahmevorrichtung (13) abgekehrten Seite des Bauteilstapels (4) ein den Umfangsflächen (29) · zugeordneter Trennanschlag (30) angeordnet ist, der auf einer parallel zur Führungsbahn-Längsrichtung (17) ausgerichteten Führung (31), um einen Verstellweg (34), der kleiner ist als eine Dicke (36) eines Bauteiles (19), verstellbar gelagert und mit einem Verstellantrieb (32) verbunden ist und daß zum Trennen des Bauteilpaketes (2) vom Bauteilstapel (4) der Verstellantrieb (26) der Entnahmevorrichtung (13) beaufschlagt ist.

2. Einrichtung nach Anspruch 1, dadurch gekennzeichnet, daß eine Führungsvorrichtung (25) der Entnahmevorrichtung (13) vertikal und die Führungsbahn (18) für den Bauteilstapel horizontal ausgerichtet ist und daß vorzugsweise die der Führungsbahn (18) zugewendeten, unteren Umfangsflächen (29) der Bauteile (19) auf einer nur mit einem Teil der Umfangsfläche (29) in Berührung stehenden Führungsleiste (50, 51) geführt sind.

3. Einrichtung nach einem der Ansprüche 1 oder 2, dadurch gekennzeichnet, daß ein Teil der Führungsbahn durch ein Magazin (3) für einen Bauteilstapel (4) gebildet ist und daß die unteren Umfangsflächen (29) der Bauteile (19) auf einer nur über einen Teil der gesamten Bauteilbreite erstreckenden Führungsleiste (48) aufliegen, wobei die den vertikalen Umfangsflächen (29) zugeordneten Führungen (49) einen größeren Abstand (114) voneinander aufweisen als die Abmessung (115) der Bauteile (19) in dieser Richtung.

4. Einrichtung nach einem der Ansprüche 1 bis 3, dadurch gekennzeichnet, daß die Form der Führungsleisten (48, 50, 51) an die Umfangsform von im Außenumfang der Bauteile (19) vorgesehenen Ausnehmungen (54) angepaßt ist.

5. Einrichtung nach einem der Ansprüche 1 bis 4, dadurch gekennzeichnet, daß dem Trennanschlag (30) mechanisch einstellbare Endanschläge (35) zugeordnet sind.

6. Einrichtung nach einem der Ansprüche 1 bis 5, dadurch gekennzeichnet, daß der Trennanschlag (30) in Rückstellrichtung (33) bzw. ein in der Rückstellrichtung (33) dem Trennanschlag (30) zugeordneter Endanschlag (35) elastisch gelagert ist.

7. Einrichtung nach einem der Ansprüche 1 bis 6, dadurch gekennzeichnet, daß die Entnahmevorrichtung (13) durch ein geradlinig verstellbares Führungsbahnteilstück (23) gebildet ist und daß vorzugsweise der, insbesondere einstellbare Anschlag (39) auf dem Führungsbahnteilstück (23) angeordnet ist.

8. Einrichtung nach einem der Ansprüche 1 bis 7, dadurch gekennzeichnet, daß das Führungsbahnteilstück (23) einen Teil einer Aufnahmekammer (24) für ein Bauteilpaket (2) bildet und die Aufnahmekammer (24) über die Länge der Führungsvorrichtung (25) durch eine an den Trennanschlag (30) anschließende Führungsfläche (37) abgeschlossen ist.

9. Einrichtung nach einem der Ansprüche 1 bis 8, dadurch gekennzeichnet, daß im Anschlag (39) bzw. in der diesem zugewandten Stirnseite der Aufnahmekammer (24) sowie in der der Aufnahmekammer (24) zugeordneten Führungsfläche (37) im Endbereich der Führungsvorrichtung (25) jeweils eine Ausnehmung (41) angeordnet ist.

10. Einrichtung nach einem der Ansprüche 1 bis 9, dadurch gekennzeichnet, daß dem Verstellantrieb (26) der Entnahmevorrichtung (13) ein Verstellkraftgeber zugeordnet ist, der über einen Grenzwertmelder (100) einer Steuervorrichtung (58) mit dem Ventil (89) des Trennanschlag-Verstellantriebes (32) bzw. dem Verstellantrieb verbunden ist.

11. Einrichtung nach einem der Ansprüche 1 bis 10, dadurch gekennzeichnet, daß der Entnahmevorrichtung (13) in dem von der Führungsbahn (18) distanzierten Bereich eine Handhabungseinrichtung (12) mit einem Entnahmegreifer (42) für ein Bauteilpaket (2) zugeordnet ist, dessen Entladestellung im Bereich eines Werkstückträgers (7) eines Transfersystems (5) angeordnet ist.

12. Einrichtung nach einem der Ansprüche 1 bis 11 für Bauteile, die eine Aufnahmebohrung aufweisen und in Richtung der Mittellängsachse der Aufnahmebohrungen ausgerichtet sind, dadurch gekennzeichnet, daß die Mittellängsachse (106) der Aufnahmebohrungen (21) des Bauteilstapels (4) horizontal und vorzugsweise senkrecht zur Förderrichtung (116) des Transfersystems (5) ausgerichtet ist und daß eine Handhabungsvorrichtung (14) zum Einführen einer Welle, insbesondere einer Ankerwelle (15) in die Aufnahmebohrungen (21) angeordnet ist.

13. Einrichtung nach einem der Ansprüche 1 bis 12, dadurch gekennzeichnet, daß der Handhabungsvorrichtung (14) in Förderrichtung (116) des Transfersystems (5) eine Bearbeitungsstation (11) nachgeordnet ist, die eine Zentriervorrichtung (104), insbesondere eine Zentriergabel (105), die in am Umfang der Bauteile (19) angeordnete Ausnehmungen (54) eingreift, aufweist sowie eine insbesondere hydraulische Preßvorrichtung (16) mit einer Ankerwellenzentriervorrichtung (103) umfaßt und daß vorzugsweise die Preßvorrichtung (16) eine Vorpreßeinheit (101) für das Bauteilpaket (2) sowie eine Hauptpreßvorrichtung (102) zum Einpressen der Ankerwelle (15) in das Bauteilpaket (2) aufweist, wobei insbesondere die Mittellängsachse (106) der Aufnahmebohrungen (21) des Bauteilpaketes (2) horizontal und zentrisch zu den horizontal ausgerichteten Preßstempeln (111) der Vorpreßeinheit (101) und Hauptpreßvorrichtung (102) ausgerichtet sind.

14. Einrichtung nach einem der Ansprüche 1 bis 13, dadurch gekennzeichnet, daß auf dem Werkstückträger (7) des Transfersystems (5) Klemmbacken (109) für die Aufnahme des Bauteilpaketes (2) angeordnet sind, und daß einer der Klemmbacken (109) in Längsrichtung der Mittellängsachse (106) der Aufnahmebohrungen (21) des Bauteilpaketes (2) über ein Vorspannglied (108) vorgespannt ist.

15. Einrichtung nach einem der Ansprüche 1 bis 14, dadurch gekennzeichnet, daß im Bereich der Einlegestation des Bauteilpaketes (2) dem Werkstückträger (7) eine entgegen dem Vorspannglied (108) der Klemmbacke (109) gerichtete Öffnungsvorrichtung (107) zugeordnet ist.

**Claims**

1. Equipment (1) for producing batches of plateshaped component parts (19), more especially laminations (20) having axial bores, for pressing onto armature shafts (15), in which the component parts (19) are conducted with a plate-shaped end surface (22) perpendicularly to the longitudinal direction (17) of a guideway (18) and associated with an end region of a stack (4) of component parts is a feed drive (45) serving more especially as pressing device (16) and associated with the opposite end region (38) is a stop (39) as well as a device (13), mounted adjustably with an adjusting drive (26), for the reception of a batch (2) of component parts, characterised in that the device (13) for the reception of the batch (2) of component parts is designed as a removal device (13) and arranged on that side of the stack (4) of component parts which in the direction of movement is averted from the removal device (13) is a separating stop (30) which is associated with the peripheral surfaces (29) and which is mounted on a guide (31), aligned parallel to the longitudinal direction (17) of the guideway, so as to be adjustable by an adjusting path (34) which is smaller than one thickness (36) of a component part (19) and is connected to an adjusting drive (32) and in that for the separating of the batch (2) of component parts from the stack (4) of component parts the adjusting drive (26) of the removal device (13) is acted upon.

2. Equipment according to claim 1, characterised in that a guide device (25) of the removal device (13) is aligned vertically and the guideway (18) for the stack of component parts is aligned horizontally and in that preferably the lower peripheral surfaces (29), facing the guideway (18), of the component parts (19) are guided on a guide ledge (50, 51) which stands in contact only with a part of the peripheral surface (29).

3. Equipment according to either one of claims 1 or 2, characterised in that a part of the guideway is formed by a magazine (3) for a stack (4) of component parts and in that the lower peripheral surfaces (29) of the component parts (19) rest on a guide ledge (48) which extends only over a part of the total component-part width, in which respect the guides (49) associated with the vertical peripheral surfaces (29) have a greater spacing (114) from one another than the dimension (115) of the component parts (19) in this direction.

4. Equipment according to any one of claims 1 to 3, characterised in that the shape of the guide ledges (48, 50, 51) is adapted to the peripheral shape of recesses (54) provided in the outer periphery of the component parts (19).

5. Equipment according to any one of claims 1 to 4, characterised in that mechanically adjustable end stops (35) are associated with the separating stop (30).

6. Equipment according to any one of claims 1 to 5, characterised in that the separating stop (30) in the restoring direction (33) or an end stop (35) associated in the restoring direction with the separating stop (30) is elastically mounted.

7. Equipment according to any one of claims 1 to 6, characterised in that the removal device (13) is formed by a guideway portion (23) which is adjustable in a straight line and in that preferably the, more especially adjustable, stop (39) is arranged on the guideway portion (23).

8. Equipment according to any one of claims 1 to 7, characterised in that the guideway portion (23) forms a part of a reception chamber (24) for a batch (2) of component parts and the reception chamber (24) is closed off over the length of the guide device (25) by a guide surface (37) linking on to the separating stop (30).

9. Equipment according to any one of claims 1 to 8, characterised in that in each case a recess (41) is arranged in the stop (39) or respectively in the end face of the reception chamber (24) facing the stop (39) as well as in the guide surface (37), associated with the reception chamber (24), in the end region of the guide device (25).

10. Equipment according to any one of claims 1 to 9, characterised in that associated with the adjusting drive (26) of the removal device (13) is an adjusting force transmitter which is connected by way of a limit value indicator (100) of a control device (58) to the valve (89) of the separating-stop adjusting drive (32) or respectively to the adjusting drive.

11. Equipment according to one of claims 1 to 10, characterised in that associated with the removal device (13) in the region distanced from the guideway (18) is a handling mechanism (12) with a removal gripper (42) for a batch (2) of component parts, the unloading position of which is arranged in the region of a workpiece carrier (7) of a transfer system (5).

12. Equipment according to any one of claims 1 to 11, for component parts which have a reception bore and are aligned in the direction of the central longitudinal axis of the reception bores, characterised in that the central longitudinal axis (106) of the reception bores (21) of the stack (4) of component parts is aligned horizontally and preferably perpendicularly to the conveying direction (116) of the transfer system (5) and in that a handling device (14) is arranged for the insertion of a shaft, more especially of an armature shaft (15), into the reception bores (21).

13. Equipment according to any one of claims 1 to 12, characterised in that arranged subsequent to the handling device (14) in the conveying direction (116) of the transfer system (5) is a processing station (11) which has a centering device (104), more especially a centering fork (105), which engages into recesses (54) provided at the periphery of the component parts (19), and comprises a more especially hydraulic pressing device (16) which an armature shaft centering device (103) and in that preferably the pressing device (16) has a prepressing unit (101) for the batch (2) of component parts as well as a main pressing device (102) for pressing the armature shaft (15) into the batch (2) of component parts, in which respect more especially the central longitudinal axis (106) of the reception bores (21) of the batch (2) of component parts are aligned horizontally and centrically to the horizontally aligned press rams (111) of the prepressing unit (101) and main pressing device (102).

14. Equipment according to any one of claims 1 to 13, characterised in that clamping jaws (109) for the reception of the batch (2) of component parts are arranged on the workpiece carrier (7) of the transfer system (5), and in that one of the clamping jaws (109) is biassed by way of a biassing member (108) in the longitudinal direction of the central longitudinal axis (106) of the reception bores (21) of the batch (2) of component parts.

15. Equipment according to any one of claims 1 to 14, characterised in that in the region of the insertion station of the batch (2) of component parts an opening device (107) directed contrary to the biassing member (108) of the clamping jaw (109) is associated with the workpiece carrier (7).

## Revendications

1. Système (1) pour la réalisation de paquets d'éléments de construction (19) en forme de plaques, en particulier de lamelles (20) à orifices axiaux, pour emmanchement à la presse sur des arbres d'induit (15), dans lequel les éléments de construction (19) sont guidés, par une face frontale (22) en forme de plaque, perpendiculairement à la direction longitudinale (17) d'un chemin de guidage (18) et à une zone extrême d'une pile d'éléments de construction (4) est associée une commande d'avancement (45) servant en particulier de dispositif de pressage (16) et à la zone extrême (58) située en regard sont associés une butée (39) ainsi qu'un dispositif (13) pour la réception du paquet d'éléments de construction (2), monté de façon déplaçable par une commande de déplacement (26), caractérisé en ce que ce dispositif (13), pour la réception du paquet d'éléments de construction (2), est réalisé sous forme de dispositif de prélèvement (13) et sur le côté de la pile d'éléments de construction (4), tourné à l'opposé dans le sens de mouvement du dispositif de prélèvement (13), est disposée une butée de séparation (30) associée aux surfaces périphériques (29) et qui est montée sur un guidage (31) orienté parallèlement à la direction longitudinale (17) du chemin de guidage, de façon à être déplaçable d'une distance de déplacement (34) qui est plus petite qu'une épaisseur (36) d'un élément de construction (19) et qui est reliée à une commande de déplacement (32) et en ce que la commande de déplacement (26) du dispositif de prélèvement (13) est sollicitée pour la séparation du paquet d'éléments de construction (2) de la pile d'éléments de construction (4).

2. Système selon la revendication 1, caractérisé en ce qu'un dispositif de guidage (25) du dispositif de prélèvement (13) est orienté verticalement et le chemin de guidage (18) pour la pile d'éléments de construction est orienté horizontalement et en ce que de préférence les surfaces périphériques inférieures (29) des éléments de construction (19), tournées vers le chemin de guidage (18), sont guidées sur une barrette de guidage (50, 51) se trouvant en contact seulement avec une partie des surfaces périphériques (29).

3. Système selon l'une des revendications 1 ou 2, caractérisé en ce qu'une partie du chemin de guidage est constituée par un magasin (3) pour une pile d'éléments de construction (4) et en ce que les surfaces périphériques inférieures (29) des éléments de construction (19) reposent sur une barrette de guidage (48) s'étendant seulement sur une partie de la largeur totale d'élément de construction, auquel cas les guidages (49), associés aux surfaces périphériques verticales (29), présentent un plus grand écartement (114) les unes des autres que la dimension (115) des éléments de construction (19) dans cette direction.

4. Système selon l'une des revendications 1 à 3, caractérisé en ce que la forme des barrettes de guidage (48, 50, 51) est adaptée à la forme périphérique d'évidements (41) prévus à la périphérie extérieure des éléments de construction (19).

5. Système selon l'une des revendications 1 à 4, caractérisé en ce qu'à la butée de séparation (30) sont associées des butées de fin de course (35) mécaniquement réglables.

6. Système selon l'une des revendications 1 à 5, caractérisé en ce que la butée de séparation (30) est montée élastiquement dans le sens de rappel (33) ou une butée de fin de course (35), associée à la butée de séparation (30), est montée élastiquement dans le sens de rappel (33).

7. Système selon l'une des revendications 1 à 6, caractérisé en ce que le dispositif de prélèvement (13) est formé par un tronçon de chemin de guidage (23) déplaçable de façon rectiligne et en ce que de préférence la butée (39) en particulier réglable est disposée sur le tronçon de chemin de guidage (23).

8. Système selon l'une des revendications 1 à 7, caractérisé en ce que le tronçon de chemin de guidage (23) forme une partie d'une chambre réceptrice (24) pour un paquet d'éléments de construction (2) et la chambre réceptrice (24) est fermée, sur la longueur du dispositif de guidage (25), par une surface de guidage (37) raccordée à la butée de séparation (30).

9. Système selon l'une des revendications 1 à 8, caractérisé en ce qu'un évidement (41) est respectivement disposé dans la butée (39) ou dans la face frontale, tournée vers celle-ci, de la chambre réceptrice (24) ainsi que dans la surface de guidage (37), associée à la chambre réceptrice (24), dans la zone extrême du dispositif de guidage (25).

10. Système selon l'une des revendications 1 à 9, caractérisé en ce qu'à la commande de déplacement (26) du dispositif de prélèvement (13) est associé un capteur de force de déplacement qui est relié, par l'intermédiaire d'un détecteur de valeur limite (100) d'un dispositif de commande (58), à la vanne (89) de la commande de déplacement (32) de la butée de séparation ou à la commande de déplacement.

11. Système selon l'une des revendications 1 à 10, caractérisé en ce qu'au dispositif de prélèvement (13), dans la région distante du chemin de guidage (18), est associé un dispositif de manipulation (12) avec un grappin de prélèvement (42) pour un paquet d'éléments de construction (2), dont la position de déchargement est disposée au voisinage d'un porte-pièce (7) d'un système de transfert (5).

12. Système selon l'une des revendications 1 à 11 pour des éléments de construction qui comportent un orifice de réception et sont orientés en direction de l'axe longitudinal médian des orifices de réception, caractérisé en ce que l'axe longitudinal médian (106) des orifices de réception (21) de la pile d'éléments de construction (4) est orienté horizontalement et de préférence perpendiculairement à la direction de transport (116) du système de transfert (5) et en ce qu'un dispositif de manipulation (14) est agencé pour l'introduction d'un arbre, en particulier d'un arbre d'induit (15) dans les orifices de réception (21).

13. Système selon l'une des revendications 1 à 12, caractérisé en ce qu'après le dispositif de manipulation (14), en direction de transport (116) du système de transfert (5), est disposée une station de façonnage (11) qui comporte un dispositif de centrage (104), en particulier une fourchette de centrage (105), qui pénètre dans des évidements (41) disposés dans la périphérie des éléments de construction (19) et comprend aussi un dispositif de pressage (16) en particulier hydraulique avec un dispositif (103) de centrage d'arbre d'induit et en ce que de préférence le dispositif de pressage (16) comporte une unité de prépressage (101) pour le paquet d'éléments de construction (2) ainsi qu'un dispositif de pressage principal (102) pour l'emmanchement à la presse des arbres d'induit (15) dans le paquet d'éléments de construction (2), auquel cas en particulier l'axe longitudinal médian (106) des orifices de réception (21) du paquet d'éléments de construction (2) est orienté horizontalement et de façon centrée relativement au poinçon de pressage (111) orienté horizontalement de l'unité de prépressage (101) et du dispositif de pressage principal (102).

14. Système selon l'une des revendications 1 à 13, caractérisé en ce que sur le porte-pièce (7) du système de transfert (5) sont disposées des mâchoires de serrage (109) pour la réception du paquet d'éléments de construction (2) et en ce qu'une des mâchoires de serrage (109) est précontrainte, par l'intermédiaire d'un organe de précontrainte (108), en direction de l'axe longitudinal médian (106) des orifices de réception (21) du paquet d'éléments de construction (2).

15. Système selon l'une des revendications 1 à 14, caractérisé en ce qu'au voisinage de la station d'introduction du paquet d'éléments de construction (2), un dispositif d'ouverture (107), orienté à l'encontre de l'organe de précontrainte (108) de la mâchoire de serrage (109), est associé au porte-pièce (7).

0 109 094

Fig. 1

1

Fig. 2

Fig. 3

Fig. 5

Fig. 4

Fig.6

Fig.7